# EUROPEAN PATENT APPLICATION

(11) **EP 2 319 753 A2**
(43) Date of publication of application: **11.05.2011**
(21) Application number: 09805134.5
(22) Date of filing: 28.07.2009
(51) Int. Cl.: B62M 11/16, B62M 11/14, B62M 1/06

(54) **ACCELERATING APPARATUS FOR A BICYCLE FOR IMPROVING THE SPEED OF TRAVEL**

(30) Priority: 04.08.2008 KR 20080075861; 07.11.2008 KR 20080110153
(71) Applicant: Soltech Co., Ltd., Gyeongsangnam-do 641-840 (KR)
(72) Inventor: SEO, Dal Won, Ggyeonggido 429-020 (KR)
(74) Representative: Schmid, Wolfgang
(86) International application number: PCT/KR2009/004178
(87) International publication number: WO 2010/016673

(57) **Abstract**

Disclosed is an accelerating system for improving the running speed of a bicycle which is capable of allowing a general bicycle, more particularly, a small bicycle for the easy acceleration in a manner far more efficient than heretofore known, by simply installing the accelerating system at a one side of a drive chain wheel axially fixed on the hub shaft of the bicycle without employing any additional fixing mechanism to a frame of the bicycle. The new accelerating system can increase the rotational force of the drive chain wheel at least two times by operating in combination with the hub shaft of the drive chain wheel during operation of the bicycle. Due to the improvement of the rotational speed of the drive chain wheel, it is possible to increase the running speed of the bicycle at least two times by using only the force required to complete one rotation of the pedals. Therefore, it allows for the conveniently use of the bicycle in a manner far more efficient than heretofore known without feeling as bored and tired as riding the prior art bicycle.

## Description

### Background of the Invention

### 1. Field of the Invention

The present invention relates generally to a bicycle, and more particularly to, an accelerating system for improving the running speed of a bicycle which is capable of allowing a general bicycle, more particularly, a small bicycle for the easy acceleration in a manner far more efficient than heretofore known, by simply installing the accelerating system on a fixed shaft that is coaxially aligned with the hub shaft of the bicycle at a one side of a drive wheel without additional fixing to the frame of the bicycle. The new accelerating system for the bicycle can increase the rotational force of the drive wheel at least two times by operating in combination with the hub shaft of the drive wheel during pedaling of the bicycle.

### 2. Description of the Prior Art

In general, bicycles have been used for a long time as traffic means along with the history of human development. Until recently, bicycles are used widely throughout the world for the purpose of sport, entertainment, tourism or outdoor recreation activity.

Typically, a bicycle comprises a body frame having a front wheel at a front part an a rear wheel (hereinafter, so called "drive wheel") at a rear part thereof, a pair of pedals fixed at both sides of a shaft of which a crank is axially fixed thereon, and a power transmission means to transfer the power generated by rotation of the pedals to the drive wheel via a chain. The power transmission means includes a driving sprocket mounted at the pedals, a driven sprocket having a latch for transmitting power toward the drive wheel, and the chain to connect the driving sprocket to the driven sprocket.

Recently, a variety of endeavors for improving the running speed of the bicycle have been proposed. For example, transmission systems for easily changing the position of the linking chain by installing the multi-step transmission sprocket assembly at a one side of the drive chain gear of the pedals and the drive wheel have been proposed.

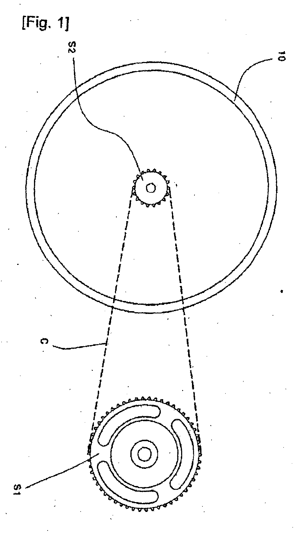

FIG. 1 is a schematic view for showing the power transmission between the front chain wheel and the rear drive wheel in a general bicycle. As shown in FIG. 1, the conventional bicycle travels in the forward direction by a rotation power that is generated by rotating the pedals forward and transmitted through the chain (c) extending between the front chain gear (S1) mounted at the shaft of pedals and the rear chain gear (S2) mounted at the drive wheel 10.

Meanwhile, a small bicycle such as a folding bicycle has been developed for the purpose of simple transportation and safekeeping. The folding bicycle incorporates special design features such as small wheels and light body frame enabling the bike to fold into a compact form, thereby facilitating transport or storage.

However, one drawback of such conventional small bicycle is that the operation for increasing the running speed thereof is troublesome. Since this small bicycle is provided with small wheels, the user must to press down the pedals with all his or her force so as to quickly rotate the drive wheels. Accordingly, it is impossible to continuously increase the running speed of the bicycle. This results in the limitation use for the folding bicycle.

Although the user can drive the general bicycle having relatively large wheels at a higher speed faster than the running speed of the small bicycle having relatively small wheels, it is necessary to have much more power than the small bicycle requires the user do.

In order to solve these disadvantages, a variety of driving systems for a bicycle have been proposed. One approach is, a driving gear of bike including a planetary gear system has been proposed on Korean Registered Utility Model No. 20418803 issued to Si-Cheol KIM on June 8, 2006.

This utility model has suggested an improved internal structure for a bicycle such as tricycles for an infant or young children, unicycle, ordinary-type cycle, which did not have any planetary gear system for transmitting the driving power between the pedals and drive wheels. That is, this utility model employed the planetary gear system inducing a ring gear, a planetary gear and a sun gear so as to increase the running speed of the bicycle.

As well known in the related technical art, the planetary gear is engaged with the sun gear and it revolves around the sun gear. When the planetary gear is engaged with the ring gear and simultaneously rotates along the inner circumferential surface of the ring gear, it rotates on its axis. The planetary gear system is a sort of the transmission for the purpose of rapidly rotating a rotational body by allowing the sun gear to be rotated at a high speed.

In the above Korean Registered Utility Model employing the planetary gear system as described above, the planetary gear is mounted to the pedals so that the user directly presses down the pedals so as to rotate the drive wheels. Then, individual gears may rotate in proportion to the number of rotations of the pedals, thereby resulting in increase of the number of rotation of the wheels due to cooperative operation of the gears.

Since the planetary gear system is installed on the rotational shaft of which the pedals are fixed at both sides thereof in the bicycle such as tricycles for an infant or young children, unicycle, ordinary-type cycle as described above, the application thereof is practically limited depending on the design of bicycle. Another drawback of the conventional planetary gear system is that the running speed of the bicycle can not be substantially enhanced because the main power is generated by the pedals.

It is also known to provide another type of bicycle comprising the planetary gear system installed at the front chain gear (S1). In other words, the sun gear is mounted onto the rotational shaft of which a pair of pedals is fixed at both sides thereof, and three planetary gears are installed within a housing of which a ring gear is provided by using a fixed disk. When the pedals are stepped by the user for forward traveling, the shaft begins to rotate, which in turn rotates the chain gear (S1) and the sun gear. The planetary gears are engaged with the ring gear and they gradually travel along the ring gear, and thereby resulting in the transmitting of driving power via the chain to the drive wheel.

However, this type of bicycle is developed for the purpose of weight training or easily climbing an upward sloping road, but not improving the running speed of the bicycle. In other words, in order to enhance the physical health, the user can take up this type of bicycle employing the gear reduction structure which involves using gears/sprockets/pulleys of different sizes to work together. Also, if the user presses down the pedal of this bicycle with relatively small power, it is possible to easily climb an upward sloping road with riding this bicycle. However, this bicycle has still disadvantage that it has the planetary gear system which cannot be adapted to enhance the running speed of the bicycle.

### Summary of the Invention

In consideration of the above-mentioned disadvantages or inconveniences of the conventional bicycle, an object of the present invention is to provide an accelerating system for improving the running speed of a bicycle which is capable of allowing a general bicycle, more particularly, a small bicycle for the easy acceleration in a manner far more efficient than heretofore known, by simply installing the accelerating system on a fixed shaft that is coaxially aligned with the hub shaft of the bicycle at a one side of a drive wheel without additional fixing to the frame of the bicycle.

In order to achieve the object, the present invention provides an accelerating system for improving the running speed of a bicycle of which a drive wheel is installed on a hub shaft extending between parts of a bicycle frame, in which a chain gear is mounted to a one side of the drive wheel and it is operatively connected to a drive chain gear mounted on a pedal of the bicycle via a chain extending there between, the improvement comprising:
a hub bush having a sun gear integrally formed along an outer circumferential surface at a one side thereof, the hub bush being engaged with either of two male threads formed at both sides of the hub shaft, in which a plurality of ball bearings may be installed onto the outer circumferential surface of the hub bush;
a ball guide bush having a mail thread formed at an outer circumferential surface thereof, the ball guide bush being operatively engaged with an outer surface of the hub bush so that the ball bearings may be located between a radial inner surface of the ball guide bush and the radial outer surface of the hub bush;
a gear cover being engaged with the mail thread of the ball guide bush, the gear cover having a latch for guiding, the rotation in one direction which is formed at a one side of an outer circumferential surface thereof, and a C-shaped latch spring for supporting the latch which may be mounted onto the outer circumferential surface of the gear cover, the gear cover including a plurality of fixed shafts for rotatably supporting a plurality of planetary gears to be engaged with the sun gear with the aid of a plurality of bearings, in which the fixed shafts are formed at a one side of the gear cover;
a gear housing having a plurality of ring gears formed at an inner circumferential surface of a one side thereof, and a plurality of gear-type engaging portions formed at an inner circumferential surface of a central opening of the gear housing, in which the planetary gears of the gear cover may be operatively engaged with the ring gears of the gear housing, and the hub shaft may pass through the central opening of the gear housing so that the gear housing may be supported on the hub shaft due to operation of the engaging portions;
a locker having a female thread formed at an inner circumferential surface thereof, a plurality of engaging protrusions formed at an outer circumferential surface of a one side of the locker, and an insertion guiding portion formed at the other side of the locker, in which the female thread may be engaged with an engaging portion provided onto the hub shaft, in which the engaging protrusions may be engaged with the engaging portions of the gear housing, and in which the insertion guiding portion may be inserted into the hub bush together with a bush ring;
a hollow cylindrical transmission body having an inner stage portion for receiving an outer periphery surface of the gear housing which is formed at an inner surface of the transmission body, and a female thread formed at an iner circumferential surface of a one side of the transmission body, the transmission body including a plurality of chain gears having different diameter respectively; and
a transmission cover having a mail thread formed at a one side thereof which may be engaged with the female thread of the transmission body, and a gear latch portion formed at an inner circumferential surface of the transmission cover, in which the latch of the gear cover may be contacted with the gear latch portion so that it can be rotated in one direction.

As described above, in the bicycle employing the an accelerating system for improving the running speed of a bicycle according to the present invention, it is possible to increase the running speed of the bicycle at least two times by using only the force required to complete one rotation of the pedals due to the improvement of the rotational speed of the drive chain wheel. Therefore, it allows for the conveniently use of the bicycle in a manner far more efficient than heretofore known without feeling as bored and tired as riding the prior art bicycle.

### Brief Description of the Drawings

The above object and other characteristic and advantages of the present invention will become more apparent by describing in detail a preferred embodiment thereof with reference to the attached drawings, in which:
FIG. 1 is, a schematic view for showing the power transmission between the front chain wheel and the rear drive wheel in a general bicycle;
FIG. 2 is a schematic view for showing the power transmission between the front chain wheel and the rear drive wheel in a bicycle of which an accelerating system for improving the running speed according to a preferred embodiment of the present invention is mounted on the hub shaft of the rear drive wheel;
FIG. 3 is an exploded perspective view of the accelerating system for improving the running speed of a bicycle according to the preferred embodiment of the present invention;
FIG. 4 is a longitudinal sectional view for showing the assembled state of the accelerating system mounted on the hub shaft;
FIG. 5 is a partially enlarged sectional view of an important part of the accelerating system illustrated in FIG. 4; and
FIGS. 6A and 6B show operational states of the important part in the accelerating system for improving the running speed of a bicycle according to the preferred embodiment of the present invention.

### Detailed Description of the Invention

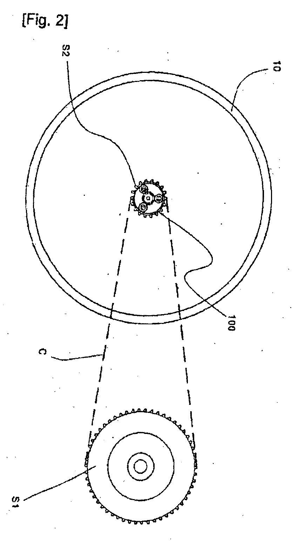

Hereinafter, the constitution and the operation of an accelerating system for improving the running speed of abicycle according to a preferred embodiment of the present invention will be explained in more detail with reference to the accompanying drawings FIGS. 2 to 6B.

Prior to proceeding to the more detailed description of the preferred embodiment according to the present invention, it should be noted that, for the sake of clarity and understanding of the invention identical components which have identical functions have been identified with identical reference numerals throughout the different views which are illustrated in each of the attached drawing Figures.

Referring to FIGS. 2 to 5, the present invention relates to an accelerating system 100 for improving the running speed of a bicycle of which a drive wheel 10 is installed on a hub shaft 12 extending between parts of a bicycle frame 1, in which a second chain gear (S2) is mounted to a one side of the drive wheel 10 and it is operatively connected to a first chain gear (S1) mounted to pedals of the bicycle via a chain (C) extending there between.

The accelerating system 100 mainly comprises a hub bush 102, a ball guide bush 113, a gear cover 106, a gear housing 108, a locker 109, a transmission body 111 and a transmission cover 110.

The hub.bush 102 includes a sun gear 101 integrally formed along an outer circumferential surface at a one side thereof. The hub bush 102 is engaged with either of two male threads 12a formed at both sides of the hub shaft 12, in which a plurality of ball bearings 112 may be installed onto the outer circumferential surface of the hub bush 102.

The ball guide bush 113 includes a mail thread 113a formed at an "outer circumferential surface thereof. The ball guide bush 113 is operatively engaged with an outer surface of the hub bush 102 so that the ball bearings 112 may be located between a radial inner surface of the ball guide bush 113 and the radial outer surface of the hub bush 102.

The gear cover 106 is engaged with the mail thread 113a of the ball guide bush 113. The gear cover 106 has a latch 114 for guiding the rotation in one direction which is formed at a one side of an outer circumferential surface thereof, and a C-shaped latch spring 115 for supporting the latch 114 which may be mounted onto the outer circumferential surface of the gear cover 106. The gear cover 106 includes a plurality of fixed shafts 104 for rotatably supporting a plurality of planetary gears 103 to be engaged with the sun gear 101 with the aid of a plurality of bearings 105. The fixed shafts 104 are formed at a one side of the gear cover 106.

The gear housing 108 has a plurality of ring gears 107 formed at an inner circumferential surface of a one side thereof, and a plurality of gear-type engaging portions 108a formed at an inner circumferential surface of a central opening of the gear housing 108. The planetary gears 103 of the gear cover 106 may be operatively engaged with the ring gears 107 of the gear housing 108. The hub shaft 12 may pass through the central opening of the gear housing 108 so that the gear housing 108 may be supported on the hub shaft 12 due to operation of the engaging portions 108a.

The locker 109 has a female thread 109b formed at an inner circumferential surface thereof, a plurality of engaging protrusions 109a formed at an outer circumferential surface of a one side of the locker 109, and an insertion guiding portion 109c formed at the other side of the locker 109 The female thread 109b may be engaged with an engaging portion 2 provided onto the hub shaft 12. The engaging protrusions 109a may be engaged with the engaging portions 108a of the gear housing 108. The insertion guiding portion 109c may be inserted into the hub bush 102 together with a bush ring 116.

The hollow cylindrical transmission body. 111 has an inner stage portion 11a for receiving an outer periphery surface of the gear housing 108 which is formed at an inner surface of the transmission body 111, and a female thread 111c formed at an inner circumferential surface of a one side of the transmission body 111. The transmission body 111 includes a plurality of chain gears (S2~S5) having different diameter respectively

The transmission cover 110 has a mail thread 10a formed at a one side thereof which may be engaged with the female thread 111c of the transmission body 111, and a gear latch portion 110b formed at an inner circumferential surface of the transmission cover 110. The latch 114 of the gear cover 106 may be contacted with the gear latch portion 110b so that it can be rotated in one direction along the gear latch portion 110b.

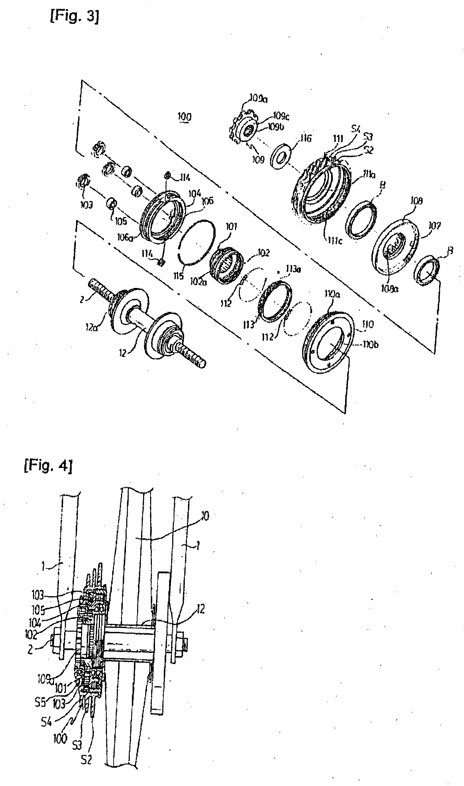

In FIG. 3, a reference character "B"(not illustrated in the above) represents' a bearing which may be disposed between the locker 109 and the gear housing 108, and/or between the gear housing 108 and the transmission body 111.

Having described the accelerating system 100 for improving the running speed of a bicycle according to the preferred embodiment of the present invention in detail, the operation of the accelerating system 100 can be understood as follows.

When the pedals of a bicycle are stepped by the user for forward traveling, the driving power created due to operation of the pedals is transmitted to the rear drive wheel 10 via the chain (C) extending between the front chain gear (S1) mounted to the shaft and the rear chain gear (S2) mounted to the drive wheel 10. At this time, the gear speed ratio of the front chain gear (S1) : the rear chain gear (S2) is 1 : 3. This difference of gear speed ratio is caused by the difference of diameter between the large chain gear (S1) and the small chain gear (S2). In other words, the gear speed ratio is inversely proportional to ratio of the gear diameters.

The front chain gear (S1) is operatively connected to the rear chain gears (S2-S5) mounted to the drive wheel 10 via the chain (C). Accordingly, every time the pedals go around once, the drive wheel 10 goes around three times.

The accelerating system 100 according to the present invention is independently installed on the hub shaft 12 of the drive wheel 10 so that it can be simply mounted to the frame of the bicycle without employing any connecting members.

It will be appreciated that a core concept of the invention, as particularly presented below, is the implementation of drive wheel's travel in a manner that it can go around six times while every time the first chain gear (S1) going around once, thereby resulting in the increase of rotational speed of the drive wheel 10 at least two times.

As well known in the related technical art, the gear ratio is the relationship between, the number of teeth on two gears that are meshed or two sprockets connected with a common roller chain, or the circumferences of two pulleys connected with a drive belt.

According to the.present invention, the number of rotation of the sun gear can be increased by increasing the number of teeth on the planetary gear 103 as compared with the number of teeth on the sun gear 101. As the number of teeth on the planetary gear 103 is increased, the number of teeth on the ring gear 107 to be engaged with the planetary gear 103 is further increased more than that of the planetary gar 103. Thereby, the number of rotation of the sun gear 101 operatively engaged with the ring gear 107 of the gear housing 108 is also increased. Since the sun gear 101 is directly mounted onto the hub shaft 12, it is possible to increase the rotational speed of the drive wheel 10 in a manner that every time the first chain gear (S1) goes around once, the drive wheel 10 goes around three or four times.

The increase of the rotational speed of the drive wheels 10 can be accomplished by the rotation of the second chain gear (S2) via the chain (C). Accordingly, the forwarding speed of the bicycle can be increased by the uniform force required to complete one rotation of the pedals.

When the drive wheel 10 rotates, the transmission body 111 rotates together with the transmission cover 110 engaged with the transmission body 111 by means of the chain gears (S2-S5). At this time, the gear latch portion 110b formed at the inner circumferential surface of the transmission cover 110 rotates in one direction due to operation of the latch 114 disposed at the outer circumferential surface of the gear cover 106. Then, the gear cover 106 rotates together with the ball guide bush 113, with meshing of the female thread formed at the inner circumferential surface of the gear cover 106 with the male thread 113a of the ball guide bush 113. At this time, the ball bearings 112, slidingly disposed onto the outer circumferential surface of the ball guide bush 113 can reduce the rotational friction to be generated during rotating of the sun gear 101 of the hub bush 102 mounted to the hub shaft 12

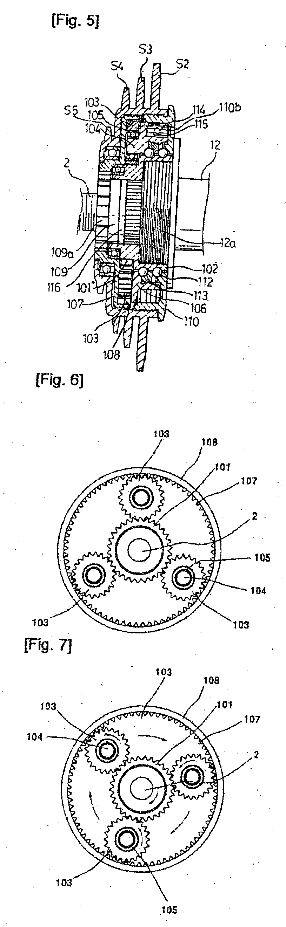

FIGS. 6A and 6B show operational states of the important part in the accelerating system for improving the running speed of a bicycle according to the preferred embodiment of the present invention.

As shown in FIGS. 6A and 6B, the planetary gear 103 is operatively mounted onto the fixed shaft 104 of the gear cover 106 through the bearings 105 and it smoothly rotates on its axis with the aid of the bearings 105. At the same time, the planetary gear 103 is engaged with the, sun gear 101 and it revolves around the sun gear 101. Also, when the planetary gear 103 is engaged with the ring gear 107 of the gear housing 108 and rotates along the inner circumferential surface of the ring gear 107, it rotates on its axis. The rotational power generated by this operation of the planetary gear 103 may be transmitted to the hub shaft 12 of the drive wheel 10 on which the sun gear 101 is coaxially connected thereto, thereby resulting in the increase of rotational speed of the hub shaft 12 and the sun gear 101. As a result, the hub shaft 12 of which the drive shaft 10 is installed thereon can rotate at a rotational speed faster than the conventional speed in the steady state. Accordingly, in the present invention employing the accelerating system as described above, every time the pedals go around once, the forward speed of the drive wheel 10 of the bicycle may be increased around at least two times in comparison with the general bicycle.

As described above, the accelerating system for improving the running speed of the bicycle is capable of allowing a general bicycle, more particularly, a small bicycle for the easy acceleration in a manner far more efficient than heretofore known, by simply installing it at a one side of a drive chain wheel axially fixed on the hub shaft of the bicycle of which the first chain gear (S1) is mounted at the pedals and the second chain gear (S2) is mounted at the drive wheel 10. Accordingly, it permits a more efficient rate of pedal travel to be established during the pedal power portion of the crank arm cycle.

Due to the improvement of the rotational speed of the drive wheel 10, it is possible to increase the running speed of the bicycle at least two times by using only the force required to complete one rotation of the pedals. Therefore, it allows for the conveniently use of the bicycle in a manner far more efficient than heretofore known without feeling as bored and tired as riding the prior art bicycle.

While the invention has been described with reference to a preferred embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. An accelerating system 100 for improving the running speed of a bicycle of which a drive wheel 10 is installed on a hub shaft 12 extending between parts of a bicycle frame 1, in which a chain gear(S2) is mounted to a one side of the drive wheel 10 and it is operatively connected to a drive chain gear (S1) mounted on a pedal of the bicycle via a chain (C) extending there between, the improvement comprising:
a hub bush 102 having a sun gear 101 integrally formed along an outer circumferential surface at a one side thereof, the hub bush 102 being engaged with either of two male threads 12a formed at both sides of the hub shaft 12, in which a plurality of ball bearings 112 may be installed onto the outer circumferential surface of the hub bush 102;
a ball guide bush 113 having a mail thread 113a formed at an outer circumferential surface thereof, the ball guide bush 113 being operatively engaged with an outer surface of the hub bush 102 so that the ball bearings 112 may be located between a radial inner surface of the ball guide bush 113 and the radial outer surface of the hub bush 102;
a gear cover 106 being engaged with the mail thread 113a of the ball guide bush 113, the gear cover 106 having a latch 114 for guiding the rotation in one direction which is formed at a one side of an outer circumferential surface thereof, and a C-shaped latch spring 115 for supporting the latch 114 which may be mounted onto the outer circumferential surface of the gear cover 106, the gear cover 106 including a plurality of fixed shafts 104 for rotatably supporting a plurality of planetary gears 103 to be engaged with the sun gear 101 with the aid of a plurality of bearings 105, in which the fixed shafts 104 are formed at a one side of the gear cover 106;
a gear housing 108 having a plurality of ring gears 107 formed at an inner circumferential surface of a one side thereof, and a plurality of gear-type engaging portions 108a formed at an inner circumferential surface of a central opening of the gear housing 108, in which the planetary gears 103 of the gear cover 106 may be operatively engaged with the ring gears 107 of the gear housing 108, and the hub shaft 12 may pass through the central opening of the gear housing 108 so that the gear housing 108 may be supported on the hub shaft 12 due to operation of the engaging portions 108a;
a locker 109 having a female thread 109b formed at an inner circumferential surface thereof, a plurality of engaging protrusions 109a formed at an outer circumferential surface of a one side of the locker 109, and an insertion guiding portion 109c formed at the other side of the locker 109, in which the female thread 109b may be engaged with an engaging portion 2 provided onto the hub shaft 12, in which the engaging protrusions 109a may be engaged with the engaging portions 108a of the gear housing 108, and in which the insertion guiding portion 109c may be inserted into the hub bush 102 together with a bush ring 116;
a hollow cylindrical transmission body 111 having an inner stage portion 11a for receiving an outer periphery surface of the gear housing 108 which is formed at an inner surface of the transmission body 111, and a female thread 111c formed at an inner circumferential surface of a one side of the transmission body 111, the transmission body 111 including a plurality of chain gears (S2~S5) having different diameter, respectively; and
a transmission cover 110 having a mail thread 10a formed at a one side thereof which may be engaged with the female thread 111c of the transmission body 111, and a gear latch portion 110b formed at an inner circumferential surface of the transmission cover 110, in which the latch 114 of the gear cover 106 may be contacted with the gear latch portion 110b so that it can be rotated in one direction.
